# FASCICULE DE BREVET EUROPEEN

(11) **EP 2 934 769 B1**
(45) Date de publication et mention de la délivrance du brevet: **15.03.2017**
(21) Numéro de dépôt: 13821853.2
(22) Date de dépôt: 19.12.2013
(51) Int. Cl.: B05D 7/00

(54) **PROCÉDÉ DE REVÊTEMENT ET PANNEAU AYANT UN TEL REVÊTEMENT**
BESCHICHTUNGSVERFAHREN UND PLATTE MIT SOLCH EINER BESCHICHTUNG
COATING METHOD AND PANEL HAVING SUCH A COATING

(30) Priorité: 24.12.2012 FR 1203591
(43) Date de publication de la demande: 28.10.2015
(73) Titulaire: Sarl Simon (CEPI), 29510 Briec (FR)
(72) Inventeur: SIMON, Dominique, F- 29510 Landrevarzec (FR)
(74) Mandataire: Ipside
(86) Numéro de dépôt international: PCT/FR2013/000352
(87) Numéro de publication internationale: WO 2014/102465

(56) Documents cités:
- WO-A1-2007/054304

## Description

### Domaine technique et état de l'art

La présente invention se rapporte à un procédé de peinture visant la rénovation murale telle que des laboratoires de recherche biologique ou pharmaceutique, de sites de production agro alimentaire ou cosmétique, de locaux utilisés par l'industrie micro-électronique, *aéronautique* ou même nucléaire, souvent nommés salle blanche.

Ces zones à traiter sont constituées de plusieurs panneaux en tôle. Le fait de rénover les panneaux évite un démontage total des différentes parties de la salle blanche puis son remontage. Le temps de manipulation est important car ces panneaux sont fixés sur des rails qui se trouvent eux-mêmes fixés aux murs et souvent encastrés dans le plafond et la résine de sol du bâtiment. La réparation sans le démontage apparaît être une solution plus simple car elle évite de suspendre, pendant un certain temps, l'activité des salles blanches.

Le peroxyde d'hydrogène est utilisé pour désinfecter les salles blanches. Le peroxyde d'hydrogène est le remplaçant du formol qui a été arrêté par décret suivant l'arrêt du 5 janvier 1993. Le peroxyde d'hydrogène, appelé également eau oxygénée, permet la stérilisation, c'est-à-dire la destruction complète de tous les microorganismes, y compris les spores bactériennes, et la désinfection, c'est-à-dire la destruction et l'élimination de types précis de microorganismes.

L'utilisation du peroxyde d'hydrogène se fait à l'état de gaz. Par exemple, le peroxyde d'hydrogène liquide à 30% est vaporisé pour obtenir environ 1200ppm. La vapeur se fractionne en eau et en oxygène non toxique et permet d'avoir une action stérilisante pour décontaminer les appareils et le matériel des laboratoires de confinement.

Les cloisons des salles blanches doivent afficher des performances imposées par les contraintes de maîtrise de cette contamination. C'est pourquoi, l'état de surface des panneaux doit se conserver au cours du temps. Mais il arrive que des incidents liés à l'activité viennent compromettre ces performances dues aux rayures ou à l'altération chimique de la surface. Par exemple, lors de la phase de décontamination, les rayures vont faire cloquer la peinture des panneaux qui, avec le temps, va s'écailler.

Le document FR2915690 décrit un procédé de peinture d'un support non métallique comprenant des étapes de ponçage pour lisser le support, l'application de plusieurs couches d'apprêt automobile dilué à environ 50%, de ponçage avant chaque couche, l'application d'enduit
au mastic de carrosserie automobile pour rattraper les défauts du support, l'application d'une couche de vernis et de lustrage. Grâce à ce procédé, il est constaté un état de surface lisse hydrofuge, brillante et résistante. Toutefois, ce procédé ne permet pas d'être adapté à la tôle des panneaux d'une salle blanche puisque ceux-ci sont métalliques. De plus, ce procédé n'est pas adapté à résister à la décontamination au peroxyde d'hydrogène.

Le document WO2007/054304 décrit une composition d'apprêt à base d'époxy comprenant au moins 10% d'oxyde de zinc en poids. Toutefois, ce procédé n'est pas adapté à résister à la décontamination au peroxyde d'hydrogène.

Le but de la présente invention est de pallier à ces inconvénients et de proposer un procédé de réparation et de rénovation de panneaux formant une salle blanche tout en résistant à la décontamination du peroxyde d'hydrogène.

### Description de l'invention

L'invention concerne un procédé de revêtement comportant les étapes successives suivantes :
- a) préparation de la zone à traiter,
- b) application d'au moins une couche d'un apprêt jusqu'à obtention d'une épaisseur de l'ordre de 100 à 450 micromètres, ladite couche d'apprêt étant composée d'au moins 10 volumes d'époxy, 2 volumes de durcisseur et entre 0 et 2 volumes de diluant, dont l'époxy comprend au moins les ingrédients suivants donnés en concentration massique par rapport au volume total d'époxy qui est de :
   - xylène : 10- 25%,
   - résine epoxy 700 < pm moyen < 1100 : 10- 25%,
   - phosphate de zinc : 2,5 - 10 %,
   - 1-methoxy-2-propanol : 2,5 - 10 %,
   - résines epoxydiques pm moyen < 700 : 2,5 - 10 %,
   - ethylbenzene : 2,5 - 10 %,
   - naphta lourd hydrodesulfure : 1 - 2,5%,
   - naphta aromatique léger : < 1%,
- c) reconditionnement de la zone à traiter,
- d) application d'au moins une couche de finition jusqu'à obtention d'une épaisseur de l'ordre de 100 à 450 micromètres, ladite couche de finition étant composée d'au moins 2 volumes de polyuréthane, 1 volume d'un durcisseur et entre 0 et 10% d'un diluant, dont le polyuréthane comprend au moins les ingrédients suivants donnés en concentration massique par rapport au volume total de polyuréthane qui est de :
   - acetate de 2-methoxy-1-methylethyle : 10 - 25%,
   - acetate de Nbutyle : 2,5-10%,
   - naphta aromatique leger : 1 - 2,5%,
   - acetate d'isobutyle : 1 - 2,5%,
   - naphta lourd hydrodesulfure : 1 - 2,5%.

Le procédé de revêtement ainsi décrit permet de résister à la décontamination du peroxyde d'hydrogène. Ledit procédé concerne un procédé de revêtement mural de salle blanche. Une salle blanche est une pièce ou une série de pièces où la concentration particulaire est maîtrisée afin de minimiser l'introduction, la génération, la rétention de particules à l'intérieur, généralement dans un but spécifique industriel ou de recherche.

L'épaisseur de la couche d'apprêt et l'épaisseur de la couche de finition permettent d'assurer une longévité importante en plus de résister à la décontamination du peroxyde d'hydrogène.

Le choix spécifique de la composition de la couche d'apprêt et de la couche de finition permet de résister à la décontamination du peroxyde d'hydrogène.

La réparation de ces panneaux sans le démontage permet de gagner un temps considérable par rapport au démontage complet d'une pièce.

Ce procédé permet de réaliser un grand nombre d'interventions :
- la rénovation de panneau sandwich comme par exemple une laine de roche entre deux plaques métalliques, lisse, nervuré, en polyéthylène, en stratifié, ou en bois compressé...
- la restauration de portes, notamment coupe-feu, blindées, isotherme...
- la réparation de bardage intérieur et extérieur,
- la pose de panneaux en polyéthylène, panneaux traditionnels, portes, huisseries...
- la peinture sur des pièces mécaniques, électroniques, militaires, nucléaires...

De préférence, l'étape a) consiste à dé-siliconer, poncer ou décaper la zone à traiter puis de la nettoyer et dégraisser la zone à traiter.

De préférence également, l'étape c) consiste à laisser sécher un minimum pendant 48 heures, à poncer la couche d'apprêt pour la lisser et à rincer l'apprêt à l'eau claire puis essuyer, tamponner au tampon gras afin de dépoussiérer.

Selon un autre aspect de l'invention, lors de l'étape b) ou lors de l'étape d), le durcisseur comprend au moins les ingrédients suivants donnés en concentration massique par rapport au volume total du durcisseur qui est de :
- xylène : 10-25%,
- hydrocarbures aromatiques en C8 : 10-25%,
- éthylbenzène : 2,5-10%,
- 2,4,6-trisphénol : 2,5-10%,
- 3,6-diazaoctane-1,8-diamine : 2,5-10%,
- butanol : 1-2,5%.

Selon une variante, lors de l'étape b) ou lors de l'étape d), le durcisseur comprend au moins les ingrédients suivants donnés en concentration massique par rapport au volume total du durcisseur qui est de :
- hydrocarbures aromatiques en C8 : 25-50%,
- homopolymère 1,6-diisocyanate d'hexaméthylène : 25-50%,
- acétate de 2-méthoxy-1-méthyléthyle : 10-25%,
- diisocyanate d'hexaméthylène : <0,5%.

Selon une autre variante, lors de l'étape b) ou lors de l'étape d), le diluant comprend au moins les ingrédients suivants donnés en concentration massique par rapport au volume total du diluant qui est de :
- acétate d'isobutyle : 25 - 50%,
- hydrocarbures aromatiques C8 : 25 - 50%,
- acétate de 2-méthoxy-1-méthyléthyle ou acétone : 10-25%.

Egalement, selon une autre variante, lors de l'étape b) ou lors de l'étape d), le diluant comprend au moins les ingrédients suivants donnés en concentration massique par rapport au volume total du diluant qui est de :
- acétate d'isobutyle : 10 - 25%,
- hydrocarbures aromatiques C9 : 25 - 50%,
- acétate de 2-méthoxy-1-méthyléthyle : 25-50%,
- acétate de 2-méthoxypropyle : < 0,5%

Selon une préférence, lors de l'étape b) ou lors de l'étape d), le diluant comprend au moins les ingrédients suivants donnés en concentration massique par rapport au volume total du diluant qui est de :
- hydrocarbures aromatiques en C8 : 50 - 75%,
- butanol : 25 - 50%,
- 4-méthylpentane-2-one : 10 - 25 %.

Selon une autre préférence, lors de l'étape b) la couche d'apprêt est appliquée au pistolet en couches croisées et lors de l'étape d), la couche de finition est appliquée au pistolet en couches croisées, de préférence en couches croisées obliques par rapport au sol. Ainsi, il est évité de voir apparaître la direction de la peinture.

L'invention concerne également un panneau recouvert d'un tel revêtement.

### Brève description des figures

D'autres caractéristiques et avantages de l'invention apparaîtront à la lumière de la description qui suit, réalisée sur la base des dessins annexés. Ces exemples sont donnés à titre non limitatif. La description est à lire en relation avec les dessins annexés dans lesquels :
- la figure 1 représente une vue d'un panneau ayant été détérioré par la décontamination au peroxyde d'hydrogène,
- la figure 2 représente une vue en perspective d'un panneau ayant un revêtement selon l'invention.

### Description de modes de réalisation de l'invention

L'invention concerne un procédé de revêtement et notamment un procédé de revêtement pour panneau.

La zone à traiter doit tenir compte des contraintes d'une salle sans poussière. Tout d'abord, la zone à traiter est équipée de bâches plastifiées qui permettent de protéger le reste de la salle de toute poussière ou projection de peinture. La climatisation et les luminaires sont cachés et il est possible qu'une ventilation soit installée aux issues de secours par le biais de gaines d'extraction. La disposition de tous ces éléments se fait en fonction de l'implantation des locaux et de l'étendue des zones à traiter.

Lors des opérations polluantes comme l'étape de ponçage et d'application de couche de peinture, il est nécessaire de limiter l'émission particulaire.

Par exemple, le ponçage est réalisé à l'aide de ponceuses aspirantes pneumatiques dont la sortie est équipée d'un filtre, ce qui limite la production de poussières.

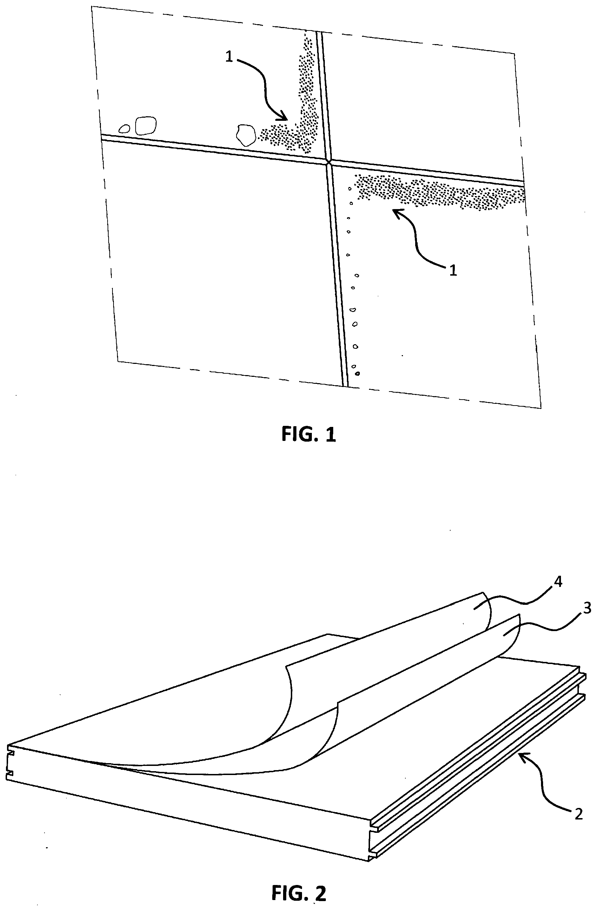

La figure 1 montre les dommages 1 liés à la décontamination au peroxyde d'hydrogène.

Lorsque le panneau est endommagé par la décontamination ou la décontamination au peroxyde d'hydrogène, le ponçage est approfondi jusqu'à ce qu'il n'y ait plus de peinture de sorte à voir la tôle du panneau à revêtir. Si le panneau n'est pas endommagé, le ponçage peut être superficiel.

La préparation de la zone à traiter peut être effectuée par l'utilisation d'un dégraissant ayant une faible densité comme 0,86.

La figure 2 montre l'application du procédé sur un panneau 2 et notamment l'étape b) d'application d'au moins une couche d'un apprêt 3 jusqu'à obtention d'une épaisseur de l'ordre de 150 à 450 micromètres, et l'étape d) d'application d'au moins une couche de finition 4 jusqu'à obtention d'une épaisseur de l'ordre de 150 à 450 micromètres.

Par exemple, le panneau 2 est constitué de deux plaques de tôle et d'une laine de roche entre les deux plaques de tôle. L'application de la couche d'un apprêt est répétée quatre fois pour obtenir une couche de 300 micromètres et l'application de la couche de finition est répétée quatre fois pour obtenir une couche de 300 micromètres.

Par exemple, la couche d'un apprêt 3 est composée de 10 volumes d'époxy et 2 volumes de durcisseur. L'époxy est composé de 25% (10-25%) de xylène, 25% (10-25%) de résine epoxy 700 < pm moyen < 1100, de 10% (2,5-10%) de phosphate de zinc, de 10% (2,5-10%) de 1-methoxy-2-propanol, de 10% (2,5-10%) de résines epoxydiques pm moyen < 700, de 10% (2,5-10%) d'ethylbenzene, de 2,5% (1-2,5%) de naphta lourd hydrodesulfure et de 0,8% (<1%)de naphta aromatique léger. Le reste de l'époxy étant du diluant pour arriver à 100% de volume d'époxy. Le durcisseur de la couche d'apprêt est composé de 25% (10-25%) de xylène, de 25% (10-25%) d'hydrocarbures aromatiques en C8, de 10% (2,5-10%) d'éthylbenzène, de 10% (2,5-10%) de 2,4,6-tris(dimethylaminomethyl)phénol, de 10% (2,5-10%) de 6-diazaoctane-1,8-diamine et de 2,5% (1-2,5%) de butanol. Selon une variante, il est utilisé un durcisseur dont la composition est la suivante : 40% (25-50%) d'hydrocarbures aromatiques en C8, 40% (25-50%) d'homopolymère 1,6-diisocyanate d'hexaméthylène, 10% (10-25%) d'acétate de 2-méthoxy-1-méthyléthyle, 0,4% (<0,5%) de diisocyanate d'hexaméthylène. Le reste du durcisseur étant du diluant pour arriver à 100% de volume de durcisseur. De préférence, le diluant est composé de 75% (50-75%) d'hydrocarbures aromatiques C8, de 50% (25-50%) de butanol et de 25% (10-25%) de 4-méthylpentane-2-one, appelé aussi méthylisobutylcétone. Dans une variante, le diluant est composé de 25% (10-25%) d'acétate d'isobutyle, de 25% (25-50%) de d'hydrocarbures aromatiques C9, de 49,8% (25-50%) d'Acétate de 2-méthoxy-1-méthyléthyle et de 0.2% (<0.5%) d'acétate de 2-méthoxypropyle.

Par exemple, la couche de finition 4 est composée de 2 volumes de polyuréthane, 1 volume d'un durcisseur. Le polyuréthane est composé de 25% (10-25%) d'acetate de 2-methoxy-1-methylethyle, de 10% (2,5-10%) d'acetate de Nbutyle, de 2,5% (1-2,5%) de naphta aromatique léger, de 2,5% (1-2,5%) d'acetate d'isobutyle et de 2,5% (1-2,5%) de naphta lourd hydrodesulfure. Le reste du polyuréthane étant du diluant pour arriver à 100% de volume de polyuréthane. Le durcisseur de la couche de finition est composé de 40% (25-50%) d'hydrocarbures aromatiques en C8, de 40% (25-50%) d'homopolymère 1,6-diisocyanate d'hexaméthylène, de 10%(10-25%) d'acétate de 2-méthoxy-1-méthyléthyle, de 0,4% (<0,5%) de diisocyanate d'hexaméthylène. Selon une variante, il est utilisé un durcisseur dont la composition est la suivante : 25% (10-25%) de xylène, 25% (10-25%) d'hydrocarbures aromatiques en C8, 10% (2,5-10%) d'éthylbenzène, 10% (2,5-10%) de 2,4,6-tris(dimethylaminomethyl)phénol, 10% (2,5-10%) de 6-diazaoctane- 1,8-diamine et 2,5% (1-2,5%) de butanol. Le reste du durcisseur étant du diluant pour arriver à 100% de volume de durcisseur. De préférence, le diluant est composé de 50% (25-50%) d'acétate d'isobutyle, de 30% (25-50%) d'hydrocarbures aromatiques C8 et de 20% (10-25%) d'acétate de 2-méthoxy-1-méthyléthyle. Selon une variante, le diluant est composé de 50% (25-50%) d'acétate d'isobutyle, de 30% (25-50%) d'hydrocarbures aromatiques C8 et de 20% (10-25%) d'acétone ou selon une autre variante le diluant est composé de 25% (10-25%) d'acétate d'isobutyle, de 25% (25-50%) de d'hydrocarbures aromatiques C9, de 49,8% (25-50%) d'Acétate de 2-méthoxy-1-méthyléthyle et de 0.2% (<0.5%) d'acétate de 2-méthoxypropyle.

La peinture est mise en oeuvre par pistolage basse pression pour les panneaux, les faux-plafonds et portes, en plusieurs couches croisées jusqu'à obtention d'un lissage parfait.

Les essais suivants montrent la résistance à l'agression chimique du procédé de, revêtement. Sept plaques en acier sont revêtues d'une couche de peinture blanche dont l'épaisseur est mesurée, conformément à la norme NF T 30124. Les résultats sont présentés dans le tableau ci-dessous :

| Ref. échantillon | Epaisseur du revêtement | | | |
|---|---|---|---|---|
| | Mini | maxi | Moyenne | Ecart-type |
| 1 | 203 | 232 | 219 | 6 |
| 2 | 190 | 228 | 219 | 12 |
| 3 | 185 | 212 | 199 | 9 |
| 4 | 196 | 217 | 204 | 6 |
| 5 | 193 | 225 | 210 | 6 |
| 6 | 182 | 204 | 195 | 6 |
| 7 | 188 | 216 | 208 | 7 |

L'essai consiste à tester la résistance du revêtement au contact de peroxyde d'hydrogène à 35 volumes d'eau oxygénée déposés sur les plaques disposées horizontalement, soit sous la forme de gouttes de l'ordre de 5 mm de diamètre environ, soit en fines gouttelettes pulvérisées sous forme d'un brouillard.

En pratique, l'eau oxygénée, pulvérisée par brumisation, se dépose sur les parois. L'essai a donc consisté à exposer les plaques à un brouillard d'eau oxygénée pour obtenir un recouvrement par de fines gouttelettes. Ces essais ont donc été réalisés avec un test plus sévère que la pratique. En effet, l'oxygène actif qui dégrade le revêtement n'existe qu'en phase liquide. Des gouttes d'environ 5 mm de diamètre moyen ont donc été déposées sur les plaques de façon à prolonger le contact avec l'eau oxygénée.

Ce tableau (ci-dessus) montre des tests réalisés en conditions extrêmes avec un taux de particule de 2000/ppm. Le minimum acceptable est donc l'épaisseur de 182 micromètres (comprenant l'ensemble des deux couches d'apprêt et de finition). Le fait d'appliquer une couche d'apprêt d'un minimum de 100 micromètres et une couche de finition d'un minimum de 100 micromètres va permettre de garantir une épaisseur de revêtement de 200 micromètres au minimum. Ainsi, le procédé de revêtement va assurer une bonne tenue dans le temps et permet de résister à la décontamination au peroxyde d'hydrogène. L'épaisseur minimale de 200 micromètres, tel qu'indiqué dans le procédé de revêtement, permet largement de résister à la décontamination au peroxyde d'hydrogène. Classiquement, la phase de décontamination se déroule avec un taux de particule entre 50 et 450/ppm. Le taux de particule est nettement moins élevé que les tests réalisés avec un taux de particule de 2000/ppm. De cette manière, l'épaisseur de l'ensemble des deux couches (apprêt et finition, 200 micromètres au minimum) est donc suffisante pour résister à la phase de décontamination du peroxyde d'hydrogène.

L'épaisseur maxi de 900 micromètres pour l'ensemble des deux couches (épaisseur de la couche d'apprêt : 450 micromètres et épaisseur de la couche de finition : 450 micromètres), se justifie par l'aspect économique. En effet, le fait de rajouter de l'épaisseur coûte plus cher en quantité d'apprêt ou de finition. C'est pourquoi, dépasser cette épaisseur n'est pas intéressant d'un point de vue économique.

Un examen visuel et un essai de rayure à l'ongle sont effectués sur chaque zone de contact comme précisé sur le tableau ci-dessous :

**Résultats observés suite à un dépôt sous forme de gouttes :**

| Durée du contact | Observations |
|---|---|
| 2h | - rien à signaler visuellement |
| | - absence de cloquage |
| | - pas de modification de la dureté à l'ongle |
| 4h | - rien à signaler visuellement, légère auréole visible sous lumière incidence uniquement |
| | - absence de cloquage |
| | - pas de modification de la dureté à l'ongle |
| 6h | - rien à signaler visuellement, légère auréole visible sous lumière incidence uniquement |
| | - absence de cloquage |
| | - pas de modification de la dureté à l'ongle |
| 7h | - empreinte légèrement visible |
| | - absence de cloquage |
| | - rayable superficiellement à l'ongle |
| 8h | - empreinte légèrement visible |
| | - apparition de petites cloques dès la fin de l'essuyage ; la taille des cloques augmente au cours du temps après essuyage |
| | - rayable superficiellement à l'ongle |
| ≥9h | - l'eau oxygénée s'est évaporée |
| | - à l'emplacement de la goutte, on note la présence d'une grosse cloque, cloquagé entre la finition et le primaire, le primaire adhérant au support |

Pour réaliser ces tests, il a été déposé des gouttes d'eau oxygénée aussi souvent qu'il a été nécessaire pour voir l'effet de l'eau oxygénée sur une plaque munie du revêtement dans le temps.

Lorsqu'un brouillard d'eau oxygénée de 35 volumes est pulvérisé sur une plaque d'environ 20 mg/100 cm², il s'évapore totalement après 30 minutes de repos à 23 °C.

Le revêtement ne présente aucun défaut visuel ni de modification de dureté à l'ongle. Le revêtement présente une tenue satisfaisante vis-à-vis du peroxyde d'hydrogène à 23°C pour des durées de contact inférieures à 6 heures. La pulvérisation de peroxyde d'hydrogène, sous forme d'un fin brouillard, n'entraîne aucun désordre. Le temps de contact est limité du fait de l'évaporation rapide du produit. Ce procédé de revêtement appliqué sur les panneaux donne des enceintes supportant la décontamination par le peroxyde d'hydrogène.

## Revendications

1. Procédé de revêtement comportant les étapes successives suivantes :
- a) préparation de la zone à traiter,
- b) application d'au moins une couche d'un apprêt (3) jusqu'à obtention d'une épaisseur de l'ordre de 100 à 450 micromètres, ladite couche d'apprêt (3) étant composée d'au moins 10 volumes d'époxy, 2 volumes de durcisseur et entre 0 et 2 volumes de diluant, dont l'époxy comprend au moins les ingrédients suivants donnés en concentration massique par rapport au volume total d'époxy qui est de :
- xylène : 10- 25%,
- résine epoxy 700 < pm moyen < 1100 : 10- 25%,
- phosphate de zinc : 2,5 - 10 %,
- 1-methoxy-2-propanol : 2,5 - 10 %,
- résines epoxydiques pm moyen < 700 : 2,5 - 10 %,
- ethylbenzene : 2,5 - 10 %,
- naphta lourd hydrodesulfure : 1 - 2,5%,
- naphta aromatique léger : < 1%,
- c) reconditionnement de la zone à traiter,
- d) application d'au moins une couche de finition (4) jusqu'à obtention d'une épaisseur de l'ordre de 100 à 450 micromètres, ladite couche de finition (4) étant composée d'au moins 2 volumes de polyuréthane, 1 volume d'un durcisseur et entre 0 et 10% d'un diluant, dont le polyuréthane comprend au moins les ingrédients suivants donnés en concentration massique par rapport au volume total de polyuréthane qui est de :
- acetate de 2-methoxy-1-methylethyle : 10 - 25%,
- acetate de Nbutyle : 2,5-10%,
- naphta aromatique leger : 1 - 2,5%,
- acetate d'isobutyle : 1 - 2,5%,
- naphta lourd hydrodesulfure : 1 - 2,5%.

2. Procédé de revêtement selon la revendication 1, **caractérisé en ce que** l'étape a) consiste à dé-siliconer, poncer ou décaper la zone à traiter puis à la nettoyer et dégraisser la zone à traiter.

3. Procédé de revêtement selon la revendication 1, **caractérisé en ce que** l'étape c) consiste à laisser sécher un minimum pendant 48 heures, à poncer la couche d'apprêt (3) pour la lisser et à rincer l'apprêt (3) à l'eau claire puis essuyer, tamponner au tampon gras afin de dépoussiérer.

4. Procédé de revêtement, **caractérisé en ce que** lors de l'étape b) ou lors de l'étape d) selon la revendication 1, le durcisseur comprend au moins les ingrédients suivants donnés en concentration massique par rapport au volume total du durcisseur qui est de :
- xylène : 10-25%,
- hydrocarbures aromatiques en C8 : 10-25%,
- éthylbenzène : 2,5-10%,
- 2,4,6-tris(dimethylaminomethyl)phénol : 2,5-10%,
- 3,6-diazaoctane-1,8-diamine : 2,5-10%,
- butanol : 1-2,5%.

5. Procédé de revêtement, **caractérisé en ce que** lors de l'étape b) ou lors de l'étape d) selon la revendication 1, le durcisseur comprend au moins les ingrédients suivants donnés en concentration massique par rapport au volume total du durcisseur qui est de :
- hydrocarbures aromatiques en C8 : 25-50%,
- homopolymère 1,6-diisocyanate d'hexaméthylène : 25-50%,
- acétate de 2-méthoxy-1-méthyléthyle : 10-25%,
- diisocyanate d'hexaméthylène : <0,5%.

6. Procédé de revêtement, **caractérisé en ce que** lors de l'étape b) ou lors de l'étape d) selon la revendication 1, le diluant comprend au moins les ingrédients suivants donnés en concentration massique par rapport au volume total du diluant qui est de :
- acétate d'isobutyle : 25 - 50%,
- hydrocarbures aromatiques C8 : 25 - 50%,
- acétate de 2-méthoxy-1-méthyléthyle ou acétone : 10-25%.

7. Procédé de revêtement, **caractérisé en ce que** lors de l'étape b) ou lors de l'étape d) selon la revendication 1, le diluant comprend au moins les ingrédients suivants donnés en concentration massique par rapport au volume total du diluant qui est de :
- acétate d'isobutyle : 10 - 25%,
- hydrocarbures aromatiques C9 : 25 - 50%,
- acétate de 2-méthoxy-1-méthyléthyle : 25-50%,
- acétate de 2-méthoxypropyle : < 0,5%.

8. Procédé de revêtement, **caractérisé en ce que** lors de l'étape b) ou lors de l'étape d) selon la revendication 1, le diluant comprend au moins les ingrédients suivants donnés en concentration massique par rapport au volume total du diluant qui est de :
- hydrocarbures aromatiques en C8 : 50 - 75%,
- butanol : 25 - 50%,
- 4-méthylpentane-2-one : 10 - 25 %.

9. Procédé de revêtement selon l'une des revendications 1 à 8, **caractérisé en ce que** lors de l'étape b) la couche d'apprêt (3) est appliquée au pistolet en couches croisées et lors de l'étape d), la couche de finition (4) est appliquée au pistolet en couches croisées, de préférence en couches croisées obliques par rapport au sol.

10. Panneau recouvert du revêtement selon les revendications 1 à 9.

## Patentansprüche

1. Beschichtungsverfahren, das die folgenden aufeinanderfolgenden Schritte aufweist:
- a) Bereitstellen des zu behandelnden Bereichs,
- b) Aufbringen mindestens einer Grundierungsschicht (3) bis eine Dicke in der Größenordnung von 100 bis 450 Mikrometern erreicht ist, wobei sich die Grundierungsschicht (3) aus mindestens 10 Volumina an Epoxid, 2 Volumina an Härtungsmittel und zwischen 0 und 2 Volumina an Verdünnungsmittel zusammensetzt, wobei das Epoxid mindestens die folgenden Bestandteile umfasst, welche entsprechend ihrer Massenkonzentration unter Bezugnahme auf das Gesamtvolumen an Epoxid angegeben sind:
- Xylol: 10 bis 25 %,
- Epoxidharz 700 < Mittelwert pm < 1100: 10-25 o, °
- Zinkphosphat: 2,5 bis 10 %,
- 1-Methoxy-2-propanol: 2,5 bis 10 %,
- epoxidartige Harze Mittelwert pm < 700: 2,5 bis 10 %,
- Ethylbenzol: 2,5 bis 10 %,
- hydrodesulfurierte schwere Naphtha: 1 bis 2, 5 %,
- leichte aromatische Naphtha: < 1 %,
- c) Rekonditionieren des zu behandelnden Bereichs,
- d) Aufbringen mindestens einer Endbehandlungsschicht (4) bis eine Dicke in der Größenordnung von 100 bis 450 Mikrometern erreicht ist, wobei sich die Endbehandlungsschicht (4) aus mindestens 2 Volumina an Polyurethan, 1 Volumen an Härtungsmittel und zwischen 0 und 10 % eines Verdünnungsmittels zusammensetzt, wobei das Polyurethan mindestens die folgenden Bestandteile umfasst, welche entsprechend ihrer Massenkonzentration unter Bezugnahme auf das Gesamtvolumen an Polyurethan angegeben sind:
- 2-Methoxy-1-methylethylacetat: 10 bis 25 %,
- n-Butylacetat: 2,5 bis 10 %,
- leichte aromatische Naphtha: 1 bis 2,5 %,
- Isobutylacetat: 1 - 2,5 %,
- hydrodesulfurierte schwere Naphtha: 1 - 2, 5 %.

2. Beschichtungsverfahren nach Anspruch 1, **dadurch gekennzeichnet, dass** der Schritt a) darin besteht, den zu behandelnden Bereich von Silikon zu befreien, abzuschleifen oder abzubeizen, um den zu behandelnden Bereich anschließend zu reinigen und zu entfetten.

3. Beschichtungsverfahren nach Anspruch 1, **dadurch gekennzeichnet, dass** der Schritt c) darin besteht, die Grundierungsschicht (3) mindestens 48 Stunden lang trocknen zu lassen und derart abzuschleifen, dass sie geglättet wird, und die Grundierung (3) mit klarem Wasser zu spülen und anschließend von Flüssigkeitsresten zu befreien und zur Entstaubung mit einem Staubbindetuch abzutupfen.

4. Beschichtungsverfahren, **dadurch gekennzeichnet, dass** in Schritt b) oder in Schritt d) nach Anspruch 1 das Härtungsmittel mindestens die folgenden Bestandteile umfasst, welche entsprechend ihrer Massenkonzentration unter Bezugnahme auf das Gesamtvolumen des Härtungsmittels angegeben sind:
- Xylol: 10 bis 25 %,
- aromatische C8-Kohlenwasserstoffe: 10 bis 25 %,
- Ethylbenzol: 2,5 bis 10 %,
- 2,4,6-tris-(Dimethylaminomethyl)phenol: 2,5 bis 10 %,
- 3,6-Diazaoctan-1,8-diamin: 2,5 bis 10 %,
- Butanol: 1 bis 2,5 %.

5. Beschichtungsverfahren, **dadurch gekennzeichnet, dass** in Schritt b) oder in Schritt d) nach Anspruch 1 das Härtungsmittel mindestens die folgenden Bestandteile umfasst, welche entsprechend ihrer Massenkonzentration unter Bezugnahme auf das Gesamtvolumen des Härtungsmittels angegeben sind:
- aromatische C8-Kohlenwasserstoffe: 25 bis 50 %,
- Hexamethylen-1,6-diisocyanat-Homopolymer: 25 bis 50 %,
- 2-Methoxy-1-methylethylacetat: 10 bis 25 %,
- Hexamethylendiisocyanat: < 0,5 %.

6. Beschichtungsverfahren, **dadurch gekennzeichnet, dass** in Schritt b) oder in Schritt d) nach Anspruch 1 das Verdünnungsmittel mindestens die folgenden Bestandteile umfasst, welche entsprechend ihrer Massenkonzentration unter Bezugnahme auf das Gesamtvolumen des Verdünnungsmittels angegeben sind:
- Isobutylacetat: 25 bis 50 %,
- aromatische C8-Kohlenwasserstoffe: 25 bis 50 %,
- 2-Methoxy-1-methylethylacetat oder Aceton: 10 bis 25 %.

7. Beschichtungsverfahren, **dadurch gekennzeichnet, dass** in Schritt b) oder in Schritt d) nach Anspruch 1 das Verdünnungsmittel mindestens die folgenden Bestandteile umfasst, welche entsprechend ihrer Massenkonzentration unter Bezugnahme auf das Gesamtvolumen des Verdünnungsmittels angegeben sind:
- Isobutylacetat: 10 bis 25 %,
- aromatische C9-Kohlenwasserstoffe: 25 - 50 %,
- 2-Methoxy-1-methylethylacetat: 25-50 %,
- 2-Methoxypropylacetat: < 0,5 %.

8. Beschichtungsverfahren, **dadurch gekennzeichnet, dass** in Schritt b) oder in Schritt d) nach Anspruch 1 das Verdünnungsmittel mindestens die folgenden Bestandteile umfasst, welche entsprechend ihrer Massenkonzentration unter Bezugnahme auf das Gesamtvolumen des Verdünnungsmittels angegeben sind:
- aromatische C8-Kohlenwasserstoffe: 50 bis 75 %,
- Butanol: 25 - 50 %,
- 4-Methylpentan-2-on: 10 bis 25 %.

9. Beschichtungsverfahren nach einem der Ansprüche 1 bis 8, **dadurch gekennzeichnet, dass** in Schritt b) die Grundierungsschicht (3) in sich überkreuzenden Schichten mit einer Spritzpistole aufgebracht wird und in Schritt d) die Endbehandlungsschritt (4) in sich überkreuzenden Schichten mit einer Spritzpistole aufgebracht wird, vorzugsweise in sich überkreuzenden Schichten, die schräg zum Boden verlaufen.

10. Paneel, das mit der Beschichtung nach den Ansprüchen 1 bis 9 überzogen ist.

## Claims

1. A coating process comprising the following successive steps:
- a) preparation of the zone to be treated,
- b) application of at least one coat of a primer (3) until a thickness of about from 100 to 450 micrometers is obtained, said coat of primer (3) being composed of at least 10 volumes of epoxy, 2 volumes of hardener and between 0 and 2 volumes of diluent, the epoxy of which comprises at least the following ingredients given as mass concentrations relative to the total volume of epoxy:
- xylene: 10 - 25%,
- epoxy resin 700 < mean mw < 1100: 10 - 25%,
- zinc phosphate: 2.5 - 10%,
- 1-methoxy-2-propanol: 2.5 - 10%,
- epoxy resins mean mw < 700: 2.5 - 10%,
- ethylbenzene: 2.5 - 10%,
- heavy naphtha hydrodesulfide: 1 - 2.5%,
- light aromatic naphtha: < 1%,
- c) reconditioning of the zone to be treated,
- d) application of a top coat (4) until a thickness of about from 100 to 450 micrometers is obtained, said top coat (4) being composed of at least 2 volumes of polyurethane, 1 volume of a hardener and between 0 and 10% of a diluent, the polyurethane of which comprises at least the following ingredients given as mass concentrations relative to the total volume of polyurethane:
- 2-methoxy-1-methylethyl acetate: 10 - 25%,
- n-butyl acetate: 2.5 - 10%,
- light aromatic naphtha: 1 - 2.5%,
- isobutyl acetate: 1 - 2.5%,
- heavy naphtha hydrodesulfide: 1 - 2.5%.

2. The coating process as claimed in claim 1, wherein step a) consists in de-siliconizing, sanding or stripping the zone to be treated and then cleaning and degreasing the zone to be treated.

3. The coating process as claimed in claim 1, wherein step c) consists in leaving to dry for a minimum of 48 hours, sanding the coat of primer (3) to make it smooth and rinsing the primer (3) with clean water and then wiping and blotting it dry with a tack cloth so as to remove the dust.

4. A coating process, wherein during step b) or during step d) as claimed in claim 1, the hardener comprises at least the following ingredients given as mass concentrations relative to the total volume of the hardener:
- xylene: 10-25%,
- C8 aromatic hydrocarbons: 10-25%,
- ethylbenzene: 2.5-10%,
- 2,4,6-tris(dimethylaminomethyl)phenol: 2.5-10%,
- 3,6-diazaoctane-1,8-diamine: 2.5-10%,
- butanol: 1-2.5%.

5. A coating process, wherein during step b) or during step d) as claimed in claim 1, the hardener comprises at least the following ingredients given as mass concentrations relative to the total volume of the hardener:
- C8 aromatic hydrocarbons: 25-50%,
- 1,6-hexamethylene diisocyanate homopolymer: 25-50%,
- 2-methoxy-1-methylethyl acetate: 10-25%,
- hexamethylene diisocyanate: < 0.5%.

6. A coating process, wherein during step b) or during step d) as claimed in claim 1, the diluent comprises at least the following ingredients given as mass concentrations relative to the total volume of the diluent:
- isobutyl acetate: 25 - 50%,
- C8 aromatic hydrocarbons: 25 - 50%,
- 2-methoxy-1-methylethyl acetate or acetone: 10-25%.

7. A coating process, wherein during step b) or during step d) as claimed in claim 1, the diluent comprises at least the following ingredients given as mass concentrations relative to the total volume of the diluent:
- isobutyl acetate: 10 - 25%,
- C9 aromatic hydrocarbons: 25 - 50%,
- 2-methoxy-1-methylethyl acetate: 25-50%,
- 2-methoxypropyl acetate: < 0.5%.

8. A coating process, wherein during step b) or during step d) as claimed in claim 1, the diluent comprises at least the following ingredients given as mass concentrations relative to the total volume of the diluent:
- C8 aromatic hydrocarbons: 50 - 75%,
- butanol: 25 - 50%,
- 4-methylpentan-2-one: 10 - 25%.

9. The coating process as claimed in one of claims 1 to 8, wherein during step b), the coat of primer (3) is applied with a spray gun in crossed coats and during step d), the top coat (4) is applied with a spray gun in crossed coats, preferably in crossed coats that are oblique relative to the floor.

10. A panel covered with the coating as claimed in claims 1 to 9.
